# EUROPEAN PATENT APPLICATION

(11) **EP 0 975 109 A1**
(43) Date of publication of application: **26.01.2000**
(21) Application number: 99905189.9
(22) Date of filing: 10.02.1999
(51) Int. Cl.: H04H 1/00, H04N 7/08, H04N 5/63

(54) **DIGITAL BROADCASTING METHOD AND RECEIVER THEREFOR**

(30) Priority: 10.02.1998 JP 2837298
(71) Applicant: Matsushita Electric Industrial Co., Ltd., Kadoma-shi, Osaka 571-8501 (JP)
(72) Inventor: SUZUKI, Hidekazu, Yamatokoriyama-shi, Nara 639-1123 (JP); TAKEDA, Kyoji, Kawanishi-shi, Hyogo 666-0142 (JP)
(74) Representative: Kügele, Bernhard
(86) International application number: JP9900575
(87) International publication number: WO9941859

(57) **Abstract**

The present invention provides a digital broadcasting method for transmitting required information to minimize the stand-by power in an apparatus for receiving a digital broadcast, and the receiving apparatus.

Before transmitting utilization data for an apparatus at the receiving end from a transmitting end, transmission schedule information including the kind of the utilization data, a receiver identifier indicating a target to which the utilization data is to be transmitted, and the transmission time at which the utilization data is to be transmitted, is multiplexed in a transport stream of a service (program) to be transmitted.

## Description

### TECHNOLOGICAL FIELD

The present invention relates to a digital broadcasting method for minimizing the stand-by power in an apparatus for receiving digital broadcasting, and the receiving apparatus.

### BACKGROUND ART

In the current television broadcasting, digital broadcasting has already started in some area, and recently multi-channel digital broadcasting has been rapidly proceeded.

In such digital broadcasting, at the receiving end, digital broadcasts are received by an IRD (Integrated Receiver Decoder) which is a home receiver connected to a television for analog broadcasting. Under the existing circumstances, digital-to-analog converted broadcasts are viewed mainly.

Control information "EMM" (Entitlement Management Message, individual key information) for descrambling scrambled data, a message directed to the user (mail), etc. are transmitted from the transmitting end to the IRD. The EMM differs according to each IRD at the receiving end, and the user cannot know when it is transmitted. The same can be said of the mail. Therefore, the IRD is always in the power ON state so that it can monitor the EMM or the like to receive it anytime. Further, there is a great possibility that an emergency warning broadcast about the occurrence of tidal wave or the like is conducted, as it is conducted in analog broadcasting. Therefore, the IRD must be ready to receive such emergency warning broadcast anytime.

By the way, in recent years, prevention of global warming has been clamored, and energy-saving type household electric appliances for personal use have been demanded not only from industries but also from consumers. So, as a matter of course, with respect to television receivers, especially, digital broadcast receivers for which greater demand is expected, those considering energy saving measures are required.

However, as described above, the IRD is always in the power ON state to monitor the EMM or the like even when it does not receive such information, and power saving of the IRD is required.

So, it is thought that the power is applied to only a part of the IRD for monitoring the EMM or the like while the power is applied to the other part only when the EMM or the like is transmitted. In the IRD, an FE (Front End) and a CPU monitor the EMM or the like. Therefore, at least the FE and the CPU must be always in the power ON state.

However, the FE is dominant in the power consumption of the IRD. That is, the power consumption of the FE surely exceeds 50% of that of the IRD, and it reaches about 80 % in some IRD. Therefore, this method cannot enhance the power-saving effect. That is, for power saving of the IRD, the power consumption of the FE must be reduced.

The present invention is made to solve the above-described problems and it is an object of the present invention to provide a digital broadcasting method for minimizing the stand-by power of an apparatus for receiving digital broadcasting, and the receiving apparatus.

### DISCLOSURE OF THE INVENTION

In order to solve the above-mentioned problems, in a digital broadcast transmitter according to the present invention (Claim 1), transmission schedule information including the kind of utilization data attached to a service (program), a receiver identifier which indicates a target to which the utilization data is to be transmitted, and the transmission time at which the utilization data is to be transmitted, is multiplexed in a transport stream of the service (program) to be transmitted, in advance of transmitting the utilization data. Here, "in advance of" means that the transmission of the transmission schedule information is earlier in time than the transmission of the utilization data.

Further, a digital broadcast transmission apparatus of the present invention (Claim 2) is a digital broadcast transmission apparatus as described in Claim 1 wherein the transmission schedule information includes, at least, the version number indicating the number of editions of the information.

Further, a digital broadcast receiver according to the present invention (Claim 3) is a digital broadcast receiver for receiving the service (program) which is broadcast by the digital broadcast transmission apparatus of Claim 1. This apparatus comprises: a front end unit for receiving the transport stream transmitted from the transmitting end; a transport decoding unit for extracting the transmission schedule information from the received transport stream; and control means for controlling the front end unit and the transport decoding unit by using the extracted transmission schedule information. The control means extracts the transmission time of utilization data to be transmitted to a receiver identifier which agrees with the self receiver identifier, from the extracted transmission schedule information, and stops power supply to a part other than the control means when the viewer does not watch the program, and supplies the power to the front end unit and the transport decoding unit at the extracted transmission time to obtain the utilization data. That is, the receiver is in the receivable state at the transmission time of the utilization data to be obtained.

Further, a digital broadcast receiver according to the present invention (Claim 4) is a digital broadcast receiver for receiving the service (program) which is broadcast by the digital broadcasting method of Claim 2. This apparatus comprises: a front end unit for receiving the transport stream transmitted from the transmitting end; a transport decoding unit for extracting the transmission schedule information from the transport stream received; and control means for controlling the front end unit and the transport decoding unit by using the extracted transmission schedule information. The control means extracts the transmission time of utilization data which is to be transmitted to a receiver identifier that agrees with the self receiver identifier, and corresponds to the version number that is not yet obtained by the self receiver, from the extracted transmission schedule information, and stops power supply to a part other than the control means when the viewer does not watch the program, and supplies the power to the front end unit and the transport decoding unit at the extracted transmission time to obtain the utilization data.

Further, a digital broadcast receiver according to the present invention (Claim 5) comprises: a first transmission path receiver having a front end unit which receives a transport stream in which a service (program) including a program of an emergency warning broadcast is multiplexed; a transport decoding unit for extracting the program of the emergency warning broadcast from the transport stream; a second transmission path receiver for receiving an emergency warning signal which is transmitted by a second transmission path and is different from a signal received by the first transmission path receiver; posting means for posting the reception of the emergency warning broadcast; and control means for stopping power supply to a part other than the second transmission path receiver when the viewer does not watch the program, and supplying the power to a part other than the control means on receipt of a signal from the second transmission path receiver which indicates the reception of the emergency warning signal when the second transmission path receiver receives the emergency warning signal, thereby receiving the signal of the program of the emergency warning broadcast, and then posting the reception of the emergency warning broadcast to the posting means. Here, "posting means" is means to post the reception of the emergency warning broadcast to the outside of the receiver by any means.

Further, a receiver according to the present invention (Claim 6) is a digital broadcast receiver as described in Claim 5 wherein the second transmission path receiver receives an emergency warning signal transmitted on a radio wave.

Further, a digital broadcast receiver according to the present invention (Claim 7) is a digital broadcast receiver as described in Claim 3 or 4 wherein the front end unit is able to receive a transport stream in which a service (program) including a program of an emergency warning broadcast is multiplexed. The apparatus further comprises posting means for posting the reception of the emergency warning broadcast; and a second transmission path receiver for receiving an emergency warning signal which is transmitted by a second transmission path and is different from a signal of a transmission path received by the front end unit. The control means receives a signal from the second transmission path receiver which indicates the reception of the emergency warning signal when the second transmission path receiver receives the emergency warning signal, and supplies the power to a part other than the control means to receive the signal of the program of the emergency warning broadcast, and posts the reception of the emergency warning broadcast to the external display means.

Further, a digital broadcast receiver according to the present invention (Claim 8) is a digital broadcast receiver as described in Claim 7 wherein the second transmission path receiver is an emergency warning signal transmitted on a radio wave.

Further, a digital broadcast receiver according to the present invention (Claim 9) is a digital broadcast receiver as described in any of Claims 5, 7 and 8 wherein, on receipt of the emergency warning signal, the external posting means displays the content of the broadcast.

Further, a digital broadcast receiver according to the present invention (Claim 10) is a digital broadcast receiver as described in any of Claims 5, 7 and 8 wherein, on receipt of the emergency warning signal, the external posting means outputs a speech according to the content of the broadcast.

Further, a digital broadcast receiver according to the present invention (Claim 11) is a digital broadcast receiver as described in any of Claims 5, 7 and 8 wherein, on receipt of the emergency warning signal, the external posting means emits light according to the content of the broadcast.

Further, a digital broadcast receiver according to the present invention (Claim 12) is a digital broadcast receiver as described in any of Claims 5, 7 and 8 wherein, on receipt of the emergency warning signal, the external posting means makes a vibration according to the content of the broadcast.

Further, a digital broadcast receiver according to the present invention (Claim 13) is a digital broadcast receiver as described in any of Claims 5, 7 and 8 wherein, on receipt of the emergency warning signal, the external posting means sends information according to the content of the broadcast by using a predetermined communication means.

Further, a digital broadcasting method according to the present invention (Claim 14) is a digital broadcasting method for transmitting, from a transmitting end, utilization data for an apparatus at the receiving end which is attached to a service (program), wherein, in advance of transmitting the utilization data attached to the service (program), transmission schedule information including the kind of utilization data, a receiver identifier which indicates a target to which the utilization data is to be transmitted, and the transmission time at which the utilization data is to be transmitted, is multiplexed in a transport stream of the service (program) to be transmitted.

Further, a digital broadcasting method according to the present invention (Claim 15) is a digital broadcasting method as described in Claim 14 wherein the transmission schedule information includes, at least, the version number indicating the number of editions of the information.

As described above, according to a digital broadcast transmission apparatus of the present invention (Claim 1), transmission schedule information including the kind or utilization data attached to a service (program), a receiver identifier which indicates a target to which the utilization data is to be transmitted, and the transmission time at which the utilization data is to be transmitted, is multiplexed in a transport stream of the service (program) to be transmitted, in advance of transmitting the utilization data. Therefore, each IRD can know the time when it will receive EMM data directed to the IRD.

Further, according to a digital broadcast transmission apparatus of the present invention (Claim 2), in a digital broadcast transmission apparatus as described in Claim 1, the transmission schedule information includes, at least, the version number indicating the number of editions of the information. Therefore, by utilizing these data at the receiving end, the receiving end can confirm whether the information directed to the self IRD has already been stored or not, whereby repeated reception of the information is avoided. As the result, the stand-by power is further reduced to enhance the power saving effect.

Further, according to a digital broadcast receiver of the present invention (Claim 3), a digital broadcast receiver for receiving the service (program) which is broadcast by the digital broadcast transmission apparatus of Claim 1 comprises: a front end unit for receiving the transport stream transmitted from the transmitting end; a transport decoding unit for extracting the transmission schedule information from the received transport stream; and control means for extracting the transmission time of utilization data to be transmitted to a receiver identifier which agrees with the self receiver identifier, from the extracted transmission schedule information, and supplying the power to the front end unit and the transport decoding unit at the extracted transmission time when the viewer does not watch the program, thereby obtaining the utilization data. Therefore, the data directed to the self IRD can be obtained reliably, and the stand-by power can be minimized to produce the power saving effect.

Further, according to a digital broadcast receiver of the present invention (Claim 4), a digital broadcast receiver for receiving the service (program) which is broadcast by the digital broadcasting method of Claim 2 comprises: a front end unit for receiving the transport stream transmitted from the transmitting end; a transport decoding unit for extracting the transmission schedule information from the transport stream received; and control means for extracting the transmission time of utilization data which is to be transmitted to a receiver identifier that agrees with the self receiver identifier, and corresponds to the version number that is not yet obtained by the self receiver, from the extracted transmission schedule information, and stopping power supply to a part other than the control means when the viewer does not watch the program, and supplying the power to the front end unit and the transport decoding unit at the extracted transmission time to obtain the utilization data. Therefore, repeated reception of the data directed to the self IRD is avoided, and the stand-by power can be reduced to enhance the power saving effect.

Further, a digital broadcast receiver of the present invention (Claim 5) comprises: a first transmission path receiver having a front end unit which receives a transport stream in which a service (program) including a program of an emergency warning broadcast is multiplexed; a transport decoding unit for extracting the program of the emergency warning broadcast from the transport stream; a second transmission path receiver for receiving an emergency warning signal which is transmitted by a second transmission path and is different from a signal received by the first transmission path receiver; posting means for posting the reception of the emergency warning broadcast; and control means for stopping power supply to a part other than the second transmission path receiver when the viewer does not watch the program, and supplying the power to a part other than the control means on receipt of a signal from the second transmission path receiver which indicates the reception of the emergency warning signal when the second transmission path receiver receives the emergency warning signal, thereby receiving the signal of the program of the emergency warning broadcast, and then posting the reception of the emergency warning broadcast to the posting means. Therefore, the emergency warning broadcast can be received reliably while minimizing the stand-by power.

Further, according to a digital broadcast receiver of the present invention (Claim 6), in a digital broadcast receiver as described in Claim 5, the second transmission path receiver receives an emergency warning signal transmitted on a radio wave. Therefore, an inexpensive second transmission path receiver can be provided easily, whereby the power consumption is further reduced.

Further, according to a digital broadcast receiver of the present invention (Claim 7), in a digital broadcast receiver as described in Claim 3 or 4, the front end unit is able to receive a transport stream in which a service (program) including a program of an emergency warning broadcast is multiplexed. The apparatus further comprises posting means for posting reception of the emergency warning broadcast; and a second transmission path receiver for receiving an emergency warning signal which is transmitted by a second transmission path and is different from a signal of a transmission path received by the front end unit. The control means receives a signal from the second transmission path receiver which indicates the reception of the emergency warning signal when the second transmission path receiver receives the emergency warning signal, and supplies the power to a part other than the control means to receive the signal of the program of the emergency warning broadcast, and posts the reception of the emergency warning broadcast to the external display means. Therefore, it is possible to minimize the stand-by power to enhance the power saving effect, while reliably receiving the emergency warning broadcast as well as the data directed to the self IRD.

Further, according to a digital broadcast receiver of the present invention (Claim 8), in a digital broadcast receiver as described in Claim 7, the second transmission path receiver is an emergency warning signal transmitted on a radio wave. Therefore, as well as the data directed to the self IRD, the emergency warning broadcast can be obtained reliably by the inexpensive second transmission path receiver, whereby the power consumption can be further reduced.

Further, according to a digital broadcasting method of the present invention (Claim 14), in a digital broadcasting method for transmitting, from a transmitting end, utilization data for an apparatus at the receiving end which is attached to a service (program), in advance of transmitting the utilization data attached to the service (program), transmission schedule information including the kind of utilization data, a receiver identifier which indicates a target to which the utilization data is to be transmitted, and the transmission time at which the utilization data is to be transmitted, is multiplexed in a transport stream of the service (program) to be transmitted. Therefore, by utilizing these data at the receiving end, the power to a part other than a control unit is turned off when the viewer does not watch the program, and the power to that part is turned on only when the data to the self IRD is transmitted, whereby the data directed to the self IRD can be obtained reliably while minimizing the stand-by power.

Further, according to a digital broadcasting method of the present invention (Claim 15), in a digital broadcasting method as described in Claim 12, the transmission schedule information includes, at least, the version number indicating the number of editions of the information. Therefore, by utilizing these data at the receiving end, the receiving end can confirm whether the information directed to the self IRD has already been stored or not, whereby repeated reception of the information is avoided. As the result, the stand-by power is further reduced to enhance the power saving effect.

Further, according to a digital broadcast method of the present invention (Claim 16), in a digital broadcast method as described in Claim 14, the transmission schedule information is transmitted individually from each of plural communication service providers, and in the first step the contents of the transmission schedule information transmitted from the plural communication service providers are multiplexed together in one transport stream to be transmitted. Therefore, the receiving end can easily obtain the transmission schedule information without omission.

### BRIEF DESCRIPTION OF THE DRAWINGS

Figure 1 is a diagram illustrating an example of transmission schedule information to be transmitted in a digital broadcasting method according to a first embodiment of the present invention.
Figure 2 is a schematic diagram illustrating an example of a transport stream in which the transmission schedule information (Preinform Table) shown in figure 1 is multiplexed.
Figure 3 is a schematic diagram illustrating an example of a transport stream in which information required for an IRD is multiplexed.
Figure 4 is a diagram illustrating another example of transmission schedule information (Preinform Table) to be transmitted in the digital broadcasting method according to the first embodiment of the present invention.
Figure 5 is a block diagram illustrating the structure of a digital broadcast transmission apparatus for implementing the digital broadcasting method according to the first embodiment of the present invention.
Figure 6 is a block diagram illustrating the structure of a digital broadcast receiver (IRD) according to the first embodiment.
Figure 7 is a diagram illustrating a flowchart for explaining the processing operation of the digital broadcast receiver according to the first embodiment.
Figure 8 is a block diagram illustrating the structure of a digital broadcast receiver (IRD) according to a second embodiment of the present invention.
Figure 9 is a block diagram illustrating the structure of a digital broadcast receiver (IRD) according to a third embodiment of the present invention.
Figure 10 is a diagram illustrating a flowchart for explaining the operation of the digital broadcast receiver according to the third embodiment.
Figure 11 is a block diagram illustrating a modification of the digital broadcast receiver according to the third embodiment.

### PREFERRED EMBODIMENTS TO EXECUTE THE INVENTION

Hereinafter, embodiments of the present invention will be described in detail based on the attached figures.

### Embodiment 1

In a digital broadcasting method according to a first embodiment of the present invention, only when required information is transmitted to an IRD at the receiving end, the power supply to a front end including a receiver for receiving the information, is turned on and, therefore, transmission schedule information relating to the time at which information required for the IRD, such as control information, is transmitted is previously transmitted from the transmission end.

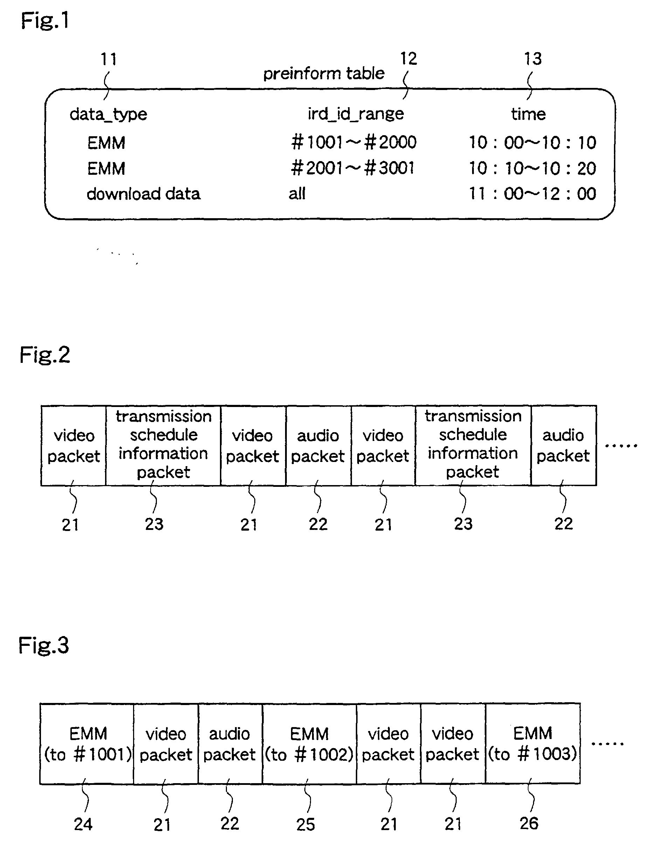

Figure 1 is a diagram illustrating an example of transmission schedule information to be transmitted in the digital broadcasting method according to the first embodiment of the invention. In this first embodiment, the transmission schedule information is referred to as "a preinform table".

In the figure, 11 denotes "data type" which indicates the type of data to be transmitted, amongst the data required for the IRD. The data required for the IRD are, for example, an EMM (Entitlement Management Message, key individual information) which is control information for descrambling scrambled data, version up information for software in the IRD, and down load data such as bug fix information. 12 denotes "ird id range" which indicates ird id as identifiers of plural IRDs to which the information to be transmitted is directed. 13 denotes "time" which indicates the time at which the information is transmitted.

The EMM is information to be transmitted individually to each IRD at the receiving end, and a unique ird id possessed by the destination IRD is embedded in each EMM. So, an ird id corresponding to each destination IRD can be described for each EMM, but in this case the contents described in the transmission schedule information (preinform table) become enormous. Therefore, a plurality of ird id are described together.

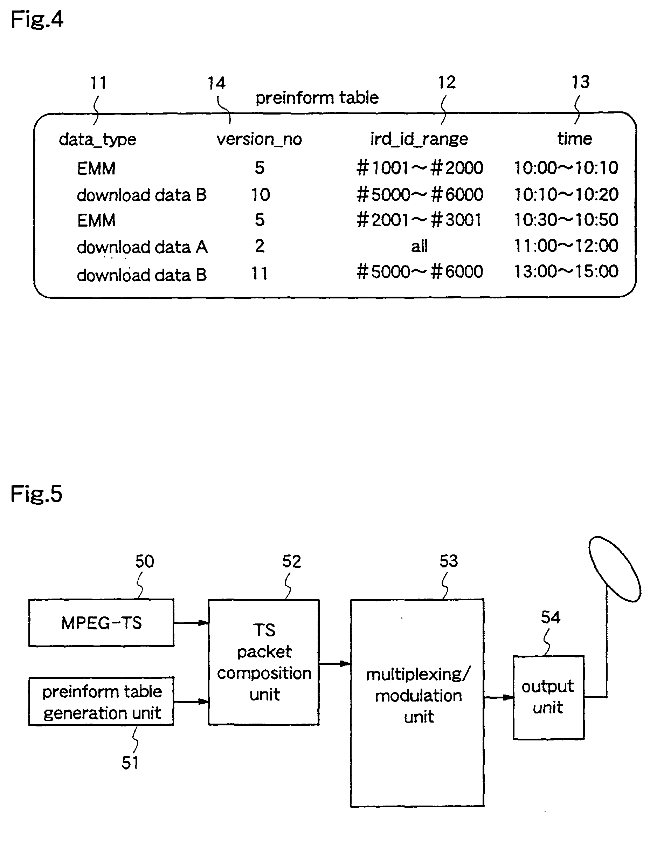

It is desirable that the above-mentioned transmission time is set with a margin for repeatedly transmitting the information several times so that the IRD can finally get the information within the time even if it fails to get the information several times. Further, since plural EMMs directed to the ird id of the plural destination IRDs are transmitted together, the transmission time must be considered according to the number of the destination IRDs. That is, when a lot of IRDs are started at the same time, there is a fear that the power situation will be confused. So, in the present invention, as shown in figure 4 to be described later, the starting times of the IRDs are shifted so that the IRDs to be started are dispersed according to the types or areas.

Figure 2 is a schematic diagram illustrating an example of a transport stream in which the transmission schedule information (preinform table) shown in figure 1 is multiplexed.

In figure 2, 21 denotes video packets by which video data are transmitted. 22 denotes audio packets by which audio data are transmitted. 23 denotes transmission schedule information packets in which the transmission schedule information (preinform table) is mapped.

The frequency of multiplexing the transmission schedule information in the TS can be arbitrarily set. Further, the transmission schedule information may be transmitted as one of tables of SI (Service Information) according to DVB (Digital Video Broadcasting), ARIB (Association of Radio Industries and Businesses) standard, and PSI (Program Specific Information) according to MPEG standard.

Figure 3 is a schematic diagram illustrating an example of a transport stream in which data required for the IRD are multiplexed.

In figure 3, the same reference numerals as those in figure 2 denote the same or corresponding parts. Further, 24, 25 and 26 denote packets of EMM (to #1001), EMM (to #1002), and EMM (to #1003), respectively, by which the EMMs corresponding to the IRDs having their own ird id are transmitted. To be specific, figure 3 shows a transport stream in which the EMMs corresponding to the IRDs having ird id (#1001∼#2000) shown in figure 1 are multiplexed. That is, the EMMs corresponding to the IRDs having the respective ird id are transmitted in different packets. Accordingly, when the data required for the IRD, which is to be multiplexed, is the download data shown in figure 1, since this corresponds to the IRD having all of the ird id at the receiving end, one download data is multiplexed in the transport stream.

The frequency of multiplexing the EMM or the download data in the transport stream can be arbitrarily set as well as the transmission schedule information. In this first embodiment, as digital broadcastings, in addition to those which are currently put to practical use, various kinds of broadcastings (e.g., ground wave television broadcasting, digital broadcasting in cable television broadcasting, etc.) are discussed, but it is expected that the broadcasting methods are different from each other. For example, in the case where one broadcast server collects plural programs from different program providers and employs a common EMM or down load data, the transmission schedule information can be multiplexed in all of the transport streams. At the receiving end, when the viewer watches a program transmitted in any transport stream, the viewer can obtain the transmission schedule information. However, it is supposed that a plurality of program providers employ different EMMs or download data and transmit their own download data or the like by their own transport streams. In this case, transmission schedule information in which the EMMs and the like to be transmitted by all the transport streams are put together is prepared, and the transmission schedule information is transmitted by all the transport streams, whereby the transmission schedule data can be easily obtained without omission at the receiving end.

Figure 4 is a diagram illustrating another example of transmission schedule information (preinform table) to be transmitted in a digital broadcasting method according to the first embodiment of the invention.

In the figure, the same reference numerals as those in figure 1 denote the same or corresponding parts. Further, 14 denotes "version no" which indicates the version numbers of EMMs and download data. That is, as described above, when a plurality of program providers employ different versions of EMMs or download data and each provider transmits the EMM and the like every time the version is improved, the receiving end receives the EMMs and the like of the same version repeatedly. Further, at the transmitting end, in order to assure reliable reception of data at the receiving end, the EMMs and download data are repeatedly transmitted within the predetermined period of time described on "time" 13 and, furthermore, the same data are again transmitted. So, if the version number is indicated, the receiving end is prevented from repeatedly receiving the EMMs or the download data of the same version.

As described above, in the digital broadcasting method according to the first embodiment of the invention, the transmitting end transmits the transmission schedule information which describes the type of data transmitted from the transmitting end to be used by the IRD at the receiving end, the identifier of the destination to which the data is transmitted, and the time at which the data is transmitted. Therefore, by utilizing these data at the receiving end, it is possible to minimize the stand-by power by turning off the power to a part other than the CPU when no program is being viewed while turning on the power to this part only when the information to the self IRD is transmitted, whereby only the data to the self IRD can be obtained with reliability.

Furthermore, since the transmitting end transmits the transmission schedule information describing the version numbers, when utilizing these data at the receiving end, it is possible to confirm whether the data to the self IRD has already been stored or not to prevent the IRD from repeatedly obtaining the data, whereby the stand-by power is further reduced to enhance the power-saving effect.

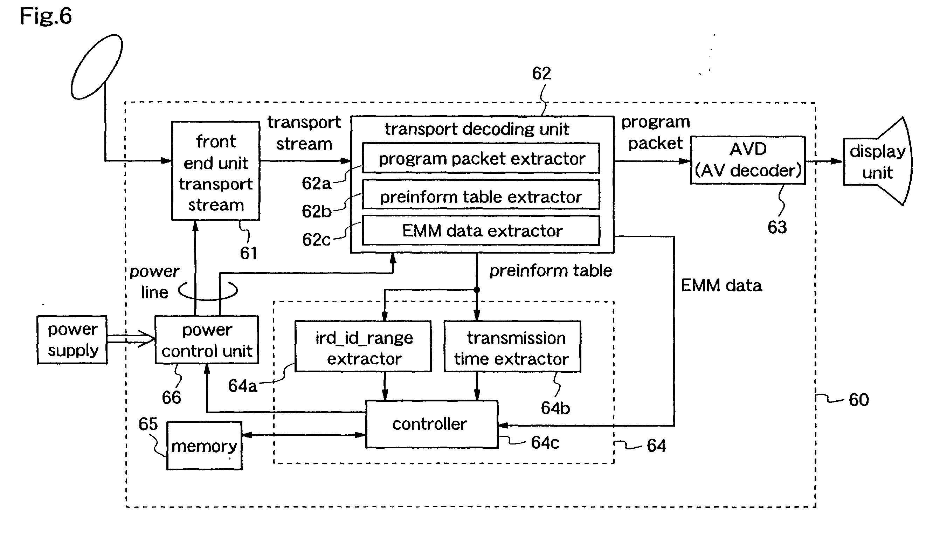

Figure 5 is a block diagram illustrating the structure of a digital broadcast transmission apparatus for implementing the above-described digital broadcasting method.

In the figure, 50 denotes an MPEG-TS unit for converting video and audio data to a transport stream according to the MPEG standard, and 51 denotes a preinform table generation unit which generates a preinform table according to IRD data which is determined such that the maker gives it when fabricating the IRD or assigns it to each IRD when selling the IRD. Further, 52 denotes a TS packet composition unit which generates TS packets from the MPEG stream and the preinform table, and 53 denotes a multiplexing/modulation unit which multiplexes the TS packets and outputs them through an output unit 54. The contents of the preinform table are as shown in figure 1. To use the digital broadcast transmission apparatus so constructed enables each ird to know when it will receive EMM data directed thereto.

Figure 6 is a diagram illustrating the structure of a digital broadcast receiver (an IRD) for receiving a signal output from the above-mentioned digital broadcast transmission apparatus. In the figure, 60 denotes an IRD. 61 denotes an FE (a front end) which corresponds to a digital demodulator for demodulating a radio wave bit stream and an error corrector for correcting bit errors. 62 denotes a TD (a transport decoder) which takes the preinform table from one transport stream output from the FE 61, and extracts packets of video, audio and the like. 63 denotes an AVD (an AV decoder) which decodes each of the video packets and audio packets extracted by the TD 62 to reproduce video and audio, and outputs them to an external display unit. 64 denotes an CPU (corresponding to control means) which controls power supply to the FE 61, the TD 62, and the AVD 63 according to the preinform table. Further, 65 denotes a memory used for processing by the CPU 64. Furthermore, the TD 62 includes a program packet extractor 62a, a preinform table extractor 62b, and an EMM data extractor 62c. 66 denotes a power control unit connected to the power supply, for controlling supply of power to the FE 61 and the TD 62 according to the output from a controller described later. Furthermore, the CPU 64 includes an ird id range extractor 64a, a transmission time extractor 64b, and a controller 64c.

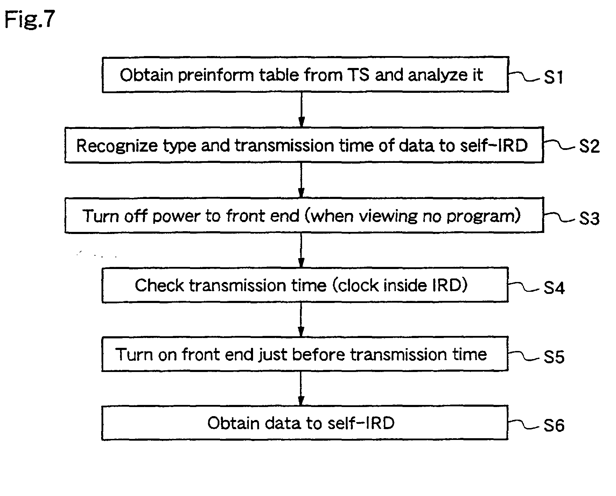

Figure 7 is a diagram illustrating a flowchart for explaining the operation of the digital broadcast receiver according to the first embodiment of the present invention.

Next, a description will be given of processing to be performed according to the data from the preinform table shown in figure 1, in the digital broadcast receiver according to the first embodiment of the present invention, along the flowchart of figure 7 00000.

Initially, the FE 61 demodulates the received radio wave bit stream to correct bit errors, and outputs a transport stream including a service (program) selected by the user. From the transport stream, the packets of the preinform table are extracted by the preinform table extractor 62b as a component of the TD 62, and the video packets and the audio packets are extracted by the program packet extractor 62a, and further the EMM data are extracted by the EMM data extractor 62c. Although in this first embodiment EM data are extracted by the TD 62, it is needless to say that other data such as download data can be extracted.

According to the preinform table packets so extracted, the CPU 64 analyzes the preinform table (Step S1). To be specific, the ird id range extractor 64a as a component of the CPU 64a searches the ird id range 12 including the ird id possessed by the self IRD 60. The transmission time extractor 64c recognizes the type of data corresponding to this id with reference to the data type 11, and the transmission time of this data with reference to the time 13 (step S2), and stores the transmission time in the memory 65. For example, when the ird id of the self IRD 60 is #1003, the transmission time extractor 64c recognizes that it should obtain the EMM to be transmitted in 10:00∼10:10 and the download data to be transmitted in 11:00∼12:00, and stores these transmission times in the memory 65. Meanwhile, the video packets and the audio packets, which have been extracted and output by the TD 62, are decoded by the AVD 63 to be output to the external display screen or the like, and the user watches this.

When the user has finished watching the program, the controller 64c as a component of the CPU 64 stops power supply to the FE 61, the TD 62, and the AVD 63 (step S3), and compares the stored transmission time with the present time by using the internal clock of the IRD 65, i.e., the clock of the CPU 64, to check the transmission time (step S4). Then, the controller 64c confirms that the present time is just before the transmission time, and controls the power control unit 66 to start power supply to the FE 61 and the TD 62 (step S5), thereby obtaining the data directed to the self IRD 60 (step S6).

For example, the CPU 64 confirms that it is several seconds to 10:00, controls the power control unit to start power supply to the FE 61 and TD 62, and receives the transport stream transmitted in 10:00∼10:10 (refer to figure 3). Then, in the TD 62, the EMM data extractor 62c extracts the packet of EMM (to #1003) from the transport stream, and the data of this packet, i.e., the EMM, is processed in the CPU 64.

In this way, the digital broadcast receiver according to the first embodiment of the present invention is provided with the CPU which obtains and analyzes the transmission schedule information transmitted from the transmitting end, and stores the transmission time of data directed to the self IRD. When the viewer watches no program, the CPU turns off the power to a part other than the CPU, and at the transmission time the CPU turns on the power to this part. Therefore, the data directed to the self IRD is reliably obtained, and the stand-by time is minimized to attain the power-saving effect.

### Embodiment 2

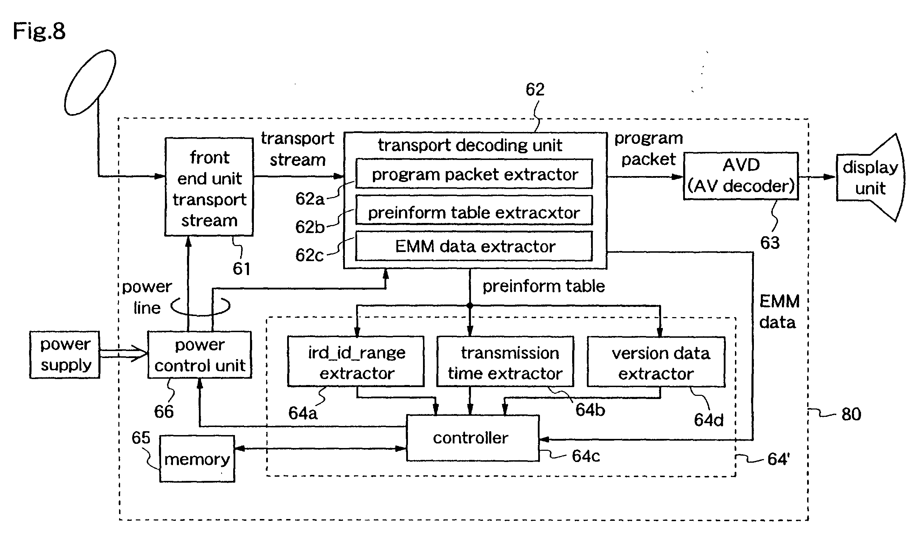

Next, a description will be given of a digital broadcast receiver according to a second embodiment of the present invention. Figure 8 is a block diagram illustrating the structure of a digital broadcast receiver (IRD) according to the second embodiment of the present invention. In the figure, the same reference numerals as those in figure 6 denote the same or corresponding parts, and 80 denotes an IRD and 64' denotes a CPU. The structure of this second embodiment is different from the structure of the first embodiment in that it is provided with a version data extractor 64d for extracting the version of data type from the preinform table.

Hereinafter, a description will be given of the case where the apparatus obtains the preinform table shown in figure 4 and performs processing based on the data from the preinform table.

Initially, in the same manner as obtaining the preinform table shown in figure 1, the preinform table shown in figure 4 is obtained and analyzed. The CPU 64' searches the ird id range 12 including the ird id possessed by the self IRD 80, and recognizes the type of data corresponding to this id with reference to the data type 11, and the transmission time of this data with reference to the time 13. Further, it can recognize the version of the type of the data. Accordingly, the CPU 64' recognizes not only the type of the data recognized as data directed to the self IRD 80 but also the version of the data type, and decides whether the data of the version has already been obtained or not. The transmission time of the data of the version which has already been obtained is not stored while only the transmission time of the data of the version which has not been obtained is stored. To be specific, if the ird id of the self IRD 80 is #5700, the CPU 64' recognizes that the download data B to be transmitted in 10:10∼10:20, the download data A to be transmitted in 11:00∼12:00, and the download data B to be transmitted in 13:00∼15:00 are data directed to the self IRD 80, and recognizes the versions of these data. Then, if the download data B of version 10 has already been obtained while the download data B of version 11 and the download data A of version 2 have not been obtained, the CPU 64' decides that the download data B of version 11 and the download data A of version 2 are to be obtained, and stores the transmission times of these data. With respect to the video packets and the like extracted by the TD 62, these packets are processed in the same manner as in the case of obtaining the preinform table shown in figure 1, and the processing after the user has finished watching the program is also the same as in that case.

As described above, according to the second embodiment, the transmission schedule information including the version data transmitted from the transmitting end is obtained and analyzed, and it is decided whether the data is directed to the self IRD and has already been stored or not, and then only the transmission time of the data which has not been stored is stored. Therefore, in addition to the effect described for the first embodiment, the data required for the self IRD is not repeatedly obtained, and the stand-by power is further reduced to enhance the power-saving effect.

### Embodiment 3

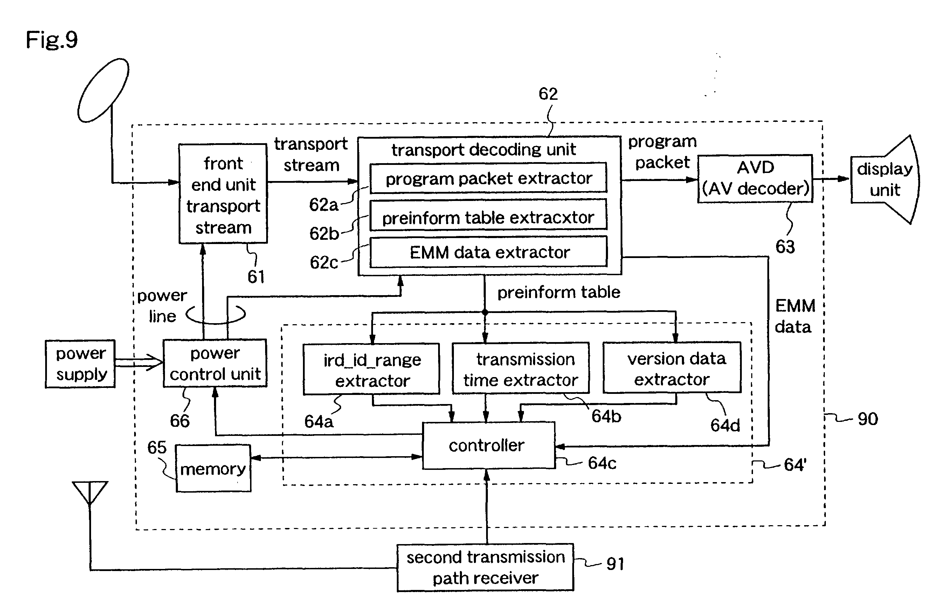

Next, a description will be given of a digital broadcast receiver according to a third embodiment of the present invention. Figure 9 is a block diagram illustrating the structure of a digital broadcast receiver (an IRD) according to the third embodiment of the present invention. In the figure, the same reference numerals as those in figure 8 denote the same or corresponding parts, and 90 denotes an IRD and 91 denotes a second transmission path receiver connected to the controller 64c, for receiving an emergency warning signal such as a radio. That is, when there occurs an emergency such as a tidal wave or an earthquake, the IRD receives an emergency warning signal which is broadcast by the second transmission path such as a radio, separately from the first transmission path comprising the FE 61, the TD 62, the ADV 63, and the CPU 64', by which a digital television signal is broadcast. The controller 64c as a component of the CPU 64' controls power supply to the FE 61, the TD 62, and the VD 63 in accordance with the transmission schedule information, like that shown in figure 8. In addition, it operates the FE 61, the TD 62, and the AVD 63 on receipt of the emergency warning signal received by the second transmission path receiver 91.

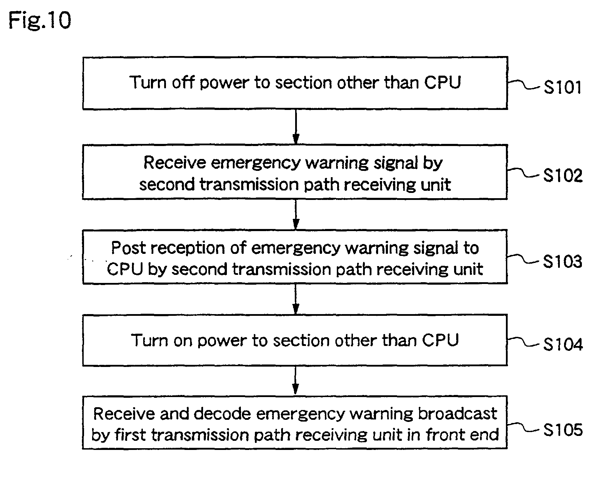

Figure 10 is a diagram illustrating a flowchart for explaining the operation of the digital broadcast receiver according to the third embodiment of the present invention.

Hereinafter, the operation will be described along the flowchart shown in figure 10.

Initially, as described for the second embodiment, the CPU 64' obtains and analyzes the preinform table shown in figure 1 or 4, recognizes the type and transmission time of data directed to the self IRD 52, and stores the transmission time and, thereafter, the user finishes watching the program. At this time, the CPU 64' turns off the power supply to the FE 61, the TD 62, and the AVD 63, other than the CPU 64' and the second transmission path receiver 91 (step S101), and compares the stored transmission time with the present time by using the internal clock of the IRD 90 to check the transmission time.

In this state, when an emergency warning signal is transmitted by a radio wave or the like as the second transmission path, the second transmission path receiver 91 receives the emergency warning signal (step S102) and posts the reception of the emergency warning signal to the CPU 64' (step S103). On receipt of this, the CPU 64' turns on the power to the FE 61, the TD 62, and the VD 63 to operate them (step S104). At this time, an emergency warning broadcast transmitted by the first transmission path is received by the first transmission path receiver included in the FE 61. Then, the TD 62 extracts the video packets and the audio packets containing video and audio of the emergency warning broadcast, respectively, from the transport stream including the emergency warning broadcast, and then the extracted packets are decoded by the AVD 63 to be output to the external display unit (step S105). The emergency warning broadcast may be a program such as a video produced for occurrence of emergency, or characters for warning occurrence of emergency, inserted in part of a video of an ordinary television program. In the case where the former emergency warning broadcast is received, for example, a transport stream for transmitting the emergency warning broadcast is previously set at the transmission end of the first transmission path and, when the second transmission path receiver 91 receives the emergency warming signal, the CPU 64' turns on the power to the FE 61 and the like and switches the transponder of the FE 61 so as to select the previously set transport stream by which the emergency warning broadcast is transmitted. Further, in the case where the latter emergency warning broadcast is received, assuming that all of the programs which are broadcast when the emergency occurs become emergency warning broadcasts, the CPU 64 turns on the power to the FE 61 and the like when receiving the emergency warning signal by the second transmission path receiver 91, and outputs the signal of the emergency warning broadcast included in the transport stream selected by the FE 61 when the previous viewing has ended.

Furthermore, the emergency warning signal and the emergency warning broadcast are not necessarily linked with each other. That is, as described above, even if the emergency warning signal and the emergency warning broadcast are separately transmitted through different transmission paths like a radio broadcast and a digital television broadcast, when an emergency such as a tidal wave or an earthquake occurs, both of the emergency warning signal and broadcast are transmitted although their transmission start times are not synchronized, whereby the user can watch the emergency warning broadcast.

Since the second transmission path receiver 91 is always in the power ON state and is not under power control by the CPU 64', the power supply for the second transmission path receiver 91 may be a dry element battery or the like different from the power supply for the IRD 90 such as the CPU 64'.

Further, the second transmission path 91 is not restricted to a radio wave, and any path may be employed as long as it can transmit an emergency warning signal, for example, a wire path may be employed. However, it is desirable to select a transmission path which simplifies the second transmission path receiver 91. That is, in this third embodiment, the second transmission path receiver 91 receives only an emergency warning signal to utilize it, while detailed data relating to the emergency warning (video and audio) are received through the first transmission path. Therefore, preferably the second transmission path receiver 91 is a simple unit which consumes less power and is inexpensive, such as a radio.

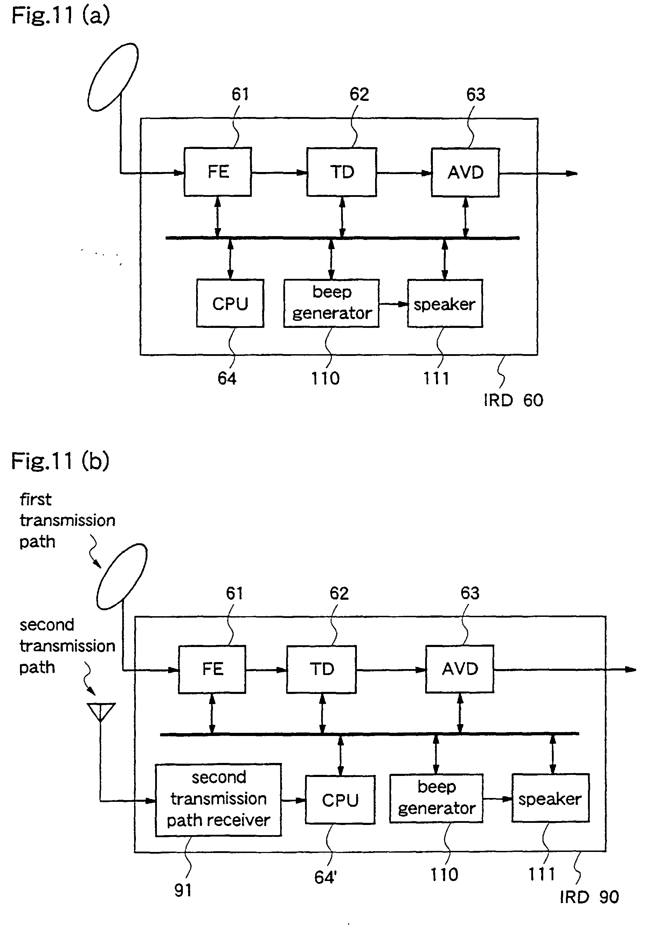

Furthermore, when receiving an emergency warning signal in the structure shown in figure 6 or 9, instead of outputting the detailed data relating to the emergency warning (video and audio), a beep may be generated by applying the power to a beep sound generator 110 and a speaker 111 in the structures shown in figure 11(a) or 11(b), respectively. In this case, it is possible to attract the viewer's attention to the emergency warning. Further, even when the display unit has a defect or the like and therefore is incapable of display, the viewer can recognize the emergency broadcast. In figure 9, to simplify the description, detailed structures of the power supply, the memory, and the CPU are omitted.

As described above, the digital broadcast receiver according to the third embodiment of the invention is provided with, besides the FE which receives a digital broadcast, the second transmission path receiver 91 which receives an emergency warning signal that is transmitted through a transmission path different from the digital broadcast, and the CPU 64' which turns on the power to the FE and the like on receipt of information from the second transmission path receiver 91. Therefore, even when the viewer does not watch the program and so the power to the FE 61 is turned off, the viewer can know the occurrence of emergency and, thereby, the viewer turns on the power to the FE 61 to receive the emergency warning broadcast. That is, it is possible to reliably receive the emergency warning broadcast while minimizing the stand-by power.

In this third embodiment, an emergency is informed by generating a beep on receipt of an emergency warning signal. However, instead of generating a sound, an emergency may be informed by light emission or vibration, or it may be informed via a public telephone network to a predetermined center.

### APPLICABILITY IN INDUSTORY

The present invention relates to a digital broadcasting method for minimizing the stand-by power in an apparatus for receiving a digital broadcast, and the receiving apparatus.

## Claims

1. A digital broadcast transmitter in which transmission schedule information including the kind of utilization data attached to a service (program), a receiver identifier indicating the target to which the utilization data is to be transmitted, and the transmission time at which the utilization data is to be transmitted, is multiplexed in a transport stream of the service (program) to be transmitted, before transmitting the utilization data.

2. A digital broadcast transmitter as described in Claim 1 wherein said transmission schedule information includes, at least, a version number indicating the number of editions of the information.

3. A digital broadcast receiver for receiving the service (program) which is broadcast by the digital broadcast transmission apparatus of Claim 1, comprising:
a front end unit for receiving the transport stream transmitted from the transmitting end;
a transport decoding unit for extracting the transmission schedule information from the received transport stream; and
control means for extracting the transmission time of utilization data to be transmitted to a receiver identifier which agrees with the self receiver identifier, from the extracted transmission schedule information, and supplying the power to the front end unit and the transport decoding unit at the extracted transmission time when the viewer does not watch the program, thereby obtaining the utilization data.

4. A digital broadcast receiver for receiving the service (program) which is broadcast by the digital broadcasting method of Claim 2, comprising:
a front end unit for receiving the transport stream transmitted from the transmitting end;
a transport decoding unit for extracting the transmission schedule information from the transport stream received; and
control means for extracting the transmission time of utilization data which is to be transmitted to a receiver identifier that agrees with the self receiver identifier, and corresponds to a version number that is not yet obtained by the self receiver, from the extracted transmission schedule information, and stopping power supply to a part other than the control means when the viewer does not watch the program, and supplying the power to the front end unit and the transport decoding unit at the extracted transmission time to obtain the utilization data.

5. A digital broadcast receiver comprising:
a first transmission path receiver having a front end unit which receives a transport stream in which a service (program) including a program of an emergency warning broadcast is multiplexed;
a transport decoding unit for extracting the program of the emergency warning broadcast from the transport stream;
a second transmission path receiver for receiving an emergency warning signal which is transmitted by a second transmission path and is different from a signal received by the first transmission path receiver;
posting means for posting the reception of the emergency warning broadcast; and
control means for stopping power supply to a part other than the second transmission path receiver when the viewer does not watch the program, and supplying the power to a part other than the control means on receipt of a signal from the second transmission path receiver which indicates the reception of the emergency warning signal when the second transmission path receiver receives the emergency warning signal, thereby receiving the signal of the program of the emergency warning broadcast, and then posting the reception of the emergency warning broadcast to the posting means.

6. A digital broadcast receiver as described in Claim 5 wherein the second transmission path receiver receives an emergency warning signal transmitted on a radio wave.

7. A digital broadcast receiver as described in Claim 3 or 4 comprising:
said front end unit being able to receive a transport stream in which a service (program) including a program of an emergency warning broadcast is multiplexed;
posting means for posting the reception of the emergency warning broadcast;
a second transmission path receiver for receiving an emergency warning signal which is transmitted by a second transmission path and is different from a signal of a first transmission path received by the front end unit; and
said control means receiving a signal from the second transmission path receiver which indicates the reception of the emergency warning signal when the second transmission path receiver receives the emergency warning signal, and supplying the power to a part other than the control means to receive the signal of the program of the emergency warning broadcast, and then posting the reception of the emergency warning broadcast to the posting means.

8. A digital broadcast receiver as described in Claim 7 wherein said second transmission path receiver is an emergency warning signal transmitted on a radio wave.

9. A digital broadcast receiver as described in any of Claims 5, 7 and 8 wherein, on receipt of the emergency warning signal, said external posting means displays the content of the broadcast.

10. A digital broadcast receiver as described in any of Claims 5, 7 and 8 wherein, on receipt of the emergency warning signal, said external posting means outputs a speech according to the content of the broadcast.

11. A digital broadcast receiver as described in any of Claims 5, 7 and 8 wherein, on receipt of the emergency warning signal, said external posting means emits light according to the content of the broadcast.

12. A digital broadcast receiver as described in any of Claims 5, 7 and 8 wherein, on receipt of the emergency warning signal, said external posting means makes a vibration according to the content of the broadcast.

13. A digital broadcast receiver as described in any of Claims 5, 7 and 8 wherein, on receipt of the emergency warning signal, said external posting means sends information according to the content of the broadcast by using a predetermined communication means.

14. A digital broadcasting method for transmitting, from a transmitting end, utilization data for an apparatus at the receiving end which is attached to a service (program), comprising:
a first step of transmitting, before transmitting the utilization data attached to the service (program), transmission schedule information including the kind of the utilization data, a receiver identifier indicating a target to which the utilization data is to be transmitted, and a transmission time at which the utilization data is to be transmitted, said information being multiplexed in a transport stream of the service (program); and
a second step of transmitting the utilization data attached to the service (program), subsequently to the first step.

15. A digital broadcasting method as described in Claim 14 wherein said transmission schedule information includes, at least, the version number indicating the number of editions of the utilization data corresponding to the type of the utilization data.

16. A digital broadcasting method as described in Claim 14 wherein said transmission schedule information is transmitted individually from each of plural communication service providers, and in the first step the contents of the transmission schedule information transmitted from the plural communication service providers are multiplexed together in one transport stream to be transmitted.
